# EUROPÄISCHE PATENTANMELDUNG

(11) **EP 3 016 234 A1**
(43) Veröffentlichungstag der Anmeldung: **04.05.2016**
(21) Anmeldenummer: 14191199.0
(22) Anmeldetag: 31.10.2014
(51) Int. Cl.: H02J 7/00, H02H 7/18

(54) **Tiefentladeschutz für Akkupacks**

(71) Anmelder: HILTI Aktiengesellschaft, 9494 Schaan (LI)
(72) Erfinder: Ziegler, Bernd, 86856 Hiltenfingen (DE)
(74) Vertreter: Hilti Aktiengesellschaft Corporate Intellectual Property

(57) **Zusammenfassung**

Ein Verfahren für einen Tiefentladeschutz für Akkupacks mit in Serie geschalteten Zellgruppen zur sicheren Unterbindung der Tiefentladung des Akkupacks durch Umpolen einer einzelnen schwächsten Zelle, dadurch gekennzeichnet, dass ein zeitlich wiederholter Differenzmessschritt zur Detektion eines auf eine wahrscheinliche Umpolung einer schwächsten Zelle hinweisenden Ereignisses vorhanden ist, bei welchem die zeitliche Änderung der Spannungsdifferenz zwischen zwei zahlenmäßig gleichen oder ungleichen Zellgruppen auf betragsmäßige Überschreitung eines Differenzschwellwerts hin überprüft wird, welcher ein zeitlich schnelles Umpolen einer einzelnen schwächsten Zelle in genau einer Zellengruppe sicher von der zeitlich langsamen Schwankung der Spannungsdifferenz zwischen beiden Zellengruppen während einer üblichen Entladekennlinie ohne Umpolen einer einzelnen schwächsten Zelle unterscheidet. Zudem werden ein Akkupack und eine Akkuhandwerkzeugmaschine mit einer Kontrollschaltung zur Durchführung des Verfahrens beschrieben.

## Beschreibung

Die Erfindung bezeichnet einen Tiefentladeschutz für Akkupacks mit Zellgruppen, insbesondere für Akkuhandwerkzeugmaschinen.

Nach der EP 743736 weist eine Akkuhandwerkzeugmaschine eine in die Motorsteuerung integrierte Kontrollschaltung für den Ladezustand des Akkupacks auf, welcher bei Unterschreiten eines vorgegebenen Grenzwertes den Akkupack bzw. die Akkuhandwerkzeugmaschine abschaltet.

Bei einer Tiefentladung eines Akkupacks wird die Zelle mit der geringsten Kapazität umgepolt. Eine einzige Tiefentladung einer Zelle kann somit einen ganzen Akkupack zerstören. Um dieses zu verhindern kann bei einem Tiefentladeschutz jede einzelne Zelle mit einer Spannungsüberwachung auf ein Unterschreiten einer Schwellspannung hin geprüft werden, was im Akkupack mit vielen Zellen jedoch einen unökonomisch hohen Verdrahtungsaufwand darstellt. Somit wird üblicherweise jeweils die absolute Gruppenspannung über mehrere Zellgruppen geprüft, wodurch sich der Verdrahtungsaufwand auf eine ökonomisch vernünftige, geringere Anzahl der Zellgruppen reduziert. Damit sind jedoch einzelne Zellen nicht direkt einzeln erfassbar, wodurch sich das Umpolen einzelner Zellen nur schwer verhindern lässt.

Zudem wird nach der US 6020743 bei einem Akkupack während des Ladevorgangs die Änderung der Spannungsdifferenz zwischen zwei zahlenmäßig gleichen, in Serie geschalten, Zellgruppen über der Zeit bestimmt. Ein auf zeitlich zunehmende Ladung des Akkupacks basierendes Ladeverfahren ist für einen Tiefentladeschutz beim Entladevorgang mit zeitlich abnehmender Ladung über einen Verbraucher ungeeignet.

Die Aufgabe der Erfindung besteht in der Realisierung eines Tiefentladeschutzes für Akkupacks mit Zellgruppen, welcher beim Entladevorgang ein Umpolen von einzelnen Zellen zuverlässig verhindert.

Die Aufgabe wird im Wesentlichen durch die Merkmale der unabhängigen Ansprüche gelöst. Vorteilhafte Weiterbildungen ergeben sich aus den Unteransprüchen.

So weist ein Verfahren für einen Tiefentladeschutz für Akkupacks mit in Serie geschalten Zellgruppen zur sicheren Unterbindung der Tiefentladung des Akkupacks durch Umpolen einer einzelnen schwächsten Zelle einen zeitlich wiederholten Differenzmessschritt zur Detektion eines auf eine wahrscheinliche Umpolung hinweisendes Ereignisses auf, bei welchem die zeitliche Änderung der Spannungsdifferenz zwischen zwei zahlenmäßig gleichen oder ungleichen Zellgruppen auf betragsmäßige Überschreitung eines Differenzschwellwerts hin überprüft wird, welcher ein zeitlich schnelles Umpolen einer einzelnen schwächsten Zelle in genau einer Zellengruppe sicher von der zeitlich langsamen Schwankung der Spannungsdifferenz zwischen beiden Zellengruppen während einer üblichen Entladekennlinie ohne Umpolen einer einzelnen schwächsten Zelle unterscheidet.

Da bei gleichartiger Belastung beider Zellgruppen des Akkupacks die Wahrscheinlichkeit der gleichzeitigen Umpolung jeweils einer einzelnen Zelle je Zellgruppe äußerst gering ist, kann im Umkehrschluss durch eine zeitliche Auswertung einer Differenzmessung die (beginnende) Umpolung genau einer Zelle je Akkupack zuverlässig detektiert werden. Da auch der Umpolvorgang einer Zelle selbst zwar ein relativ schneller, aber dennoch zeitlich stetiger Vorgang ist, kann somit vom Tiefentladeschutz bereits im noch reversiblen Bereich der Umpolung die weitere Entladung des Akkupacks unterbunden werden, welcher sich wieder selbstständig oder mittels Anwendung entsprechend bekannter Revitalisierungsverfahren erholen kann.

Vorteilhaft beträgt der Differenzschwellwert zwischen 0.2 V und 1.0 V (abhängig von der Zellenzahl und Zellentechnologie wie Nickel-Metall-Hydrid(NiMH), Nickel-Cadmium(NiCd) oder Lithium-lonen(Li-lon), Lithium-Polymer(Li-Polymer)), wodurch langsame Schwankungen der Spannungsdifferenzen zwischen beiden Zellengruppen hinreichend sicher unterdrückt aber eine beginnende Umpolung noch im reversiblen Bereich zuverlässig detektiert wird.

Vorteilhaft wird der Differenzmessschritt zeitlich periodisch mit einer Differenzschrittspanne im Bereich zwischen 0.1 s und 10 s, weiter vorteilhaft 1 s, wiederholt, wodurch eine relativ schnell verlaufende beginnende Umpolung noch rechtzeitig im reversiblen Bereich zuverlässig detektiert wird.

Vorteilhaft wird in einem weiteren zeitlich wiederholten Absolutmessschritt zur Detektion eines ein auf eine wahrscheinliche Umpolung hinweisendes Ereignisses die Gesamtspannung des Akkupacks und/oder die einzelnen Gruppenspannungen der beiden Zellengruppen auf Unterschreitung eines Absolutschwellwerts hin überprüft, wodurch zusätzlich eine integral überhöhte Umpolwahrscheinlichkeit der Zellen zuverlässig verhindert wird.

Vorteilhaft wird in einem dem Differenzmessschritt und optional dem Absolutmessschritt nachfolgenden bedingten Trennschritt beim Eintritt des auf eine wahrscheinliche Umpolung hinweisenden Ereignisses der Akkupack elektrisch vom Verbraucher getrennt, wodurch eine Tiefentladung unabhängig von der Zwischenschaltung des Nutzers verhindert wird.

Vorteilhaft ist die dem Tiefentladeschutz zugeordnete Kontrollschaltung vollständig innerhalb des Akkupacks angeordnet und weiter vorteilhaft in einem Mikrocontroller integriert, wodurch diese ökonomisch als Massenprodukt herstellbar ist.

Vorteilhaft weist der Akkupack wenigstens zwei in Serie geschaltete Zellgruppen mit jeweils einer gleichen oder ungleichen Anzahl von Zellen im Mengenbereich zwischen 5 und 20, weiter vorteilhaft genau 15 auf, wodurch mit typabhängigen Zellenspannungen zwischen 0,5 V und 4,0 V (Li-Ion) die für den Betrieb von leistungsfähigen Akkuhandwerkzeugmaschinen erforderlichen hohen Betriebsspannungen von bspw. 18 V bzw. 36 V bereitgestellt werden.

Alternativ ist die dem Tiefentladeschutz zugeordnete Kontrollschaltung vollständig in die Motorsteuerung einer Akkuhandwerkzeugmaschine integriert, welche einen zugeordneten Akkupack mit einem Mittelspannungskontakt, welcher elektrisch zwischen wenigstens zwei, weiter vorteilhaft genau zwei, in Serie geschalten Zellgruppen mit jeweils einer gleichen oder ungleichen Anzahl von Zellen angeordnet ist sowie einen antreibenden Elektromotor aufweist, wodurch insbesondere ein Leistungsschaltelement (Relais oder Leistungshalbleiter) der Motorsteuerung nutzbar ist und somit einfache Akkupacks ohne eigenen Tiefentladeschutz nutzbar sind.

Die Erfindung wird bezüglich eines vorteilhaften Ausführungsbeispiels näher erläutert mit:
- Fig. 1: als Akkupack mit integriertem Tiefentladeschutz
- Fig. 2: als Akkuhandwerkzeugmaschine mit integriertem Tiefentladeschutz
- Fig. 3: als Entladediagramm eines Akkupacks
- Fig. 4: als Verfahren des Tiefentladeschutzes

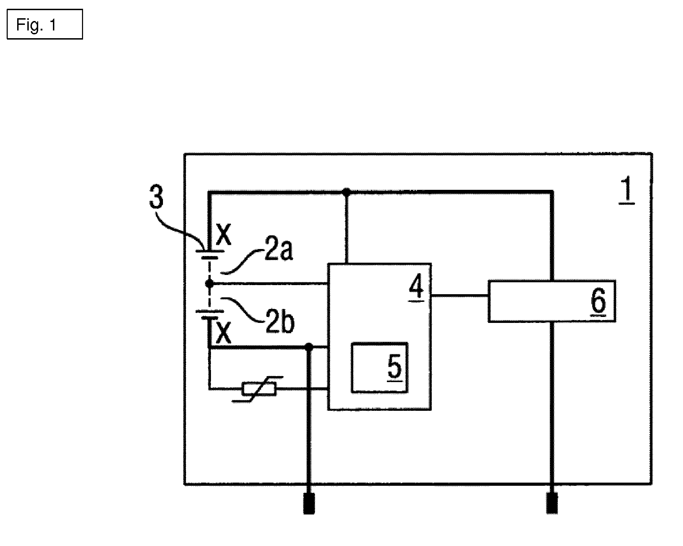

Nach Fig. 1 weist ein einzelner Akkupack 1 mit genau zwei in Serie geschalten Zellgruppen 2a, 2b zu je X = 15 einzelnen Nickel-Cadmium(NiCd)-Zellen 3 von je 1,2 V (0,5 V bis 1, 2 V abhängig vom Belastungsstrom IL) Zellspannung UZ (3) eine vollständig innerhalb des Akkupacks 1 angeordnete Kontrollschaltung 4 in Form eines Mikrocontrollers mit einem programmgesteuerten Verfahrensalgorithmus 5 für den Tiefentladeschutz und mit Leistungsschaltelement 6 in Form eines integrierten Halbleiterleistungsschalters auf. Alternativ können aber auch mehr als zwei in Serie geschalten Zellgruppen verwendet werden.

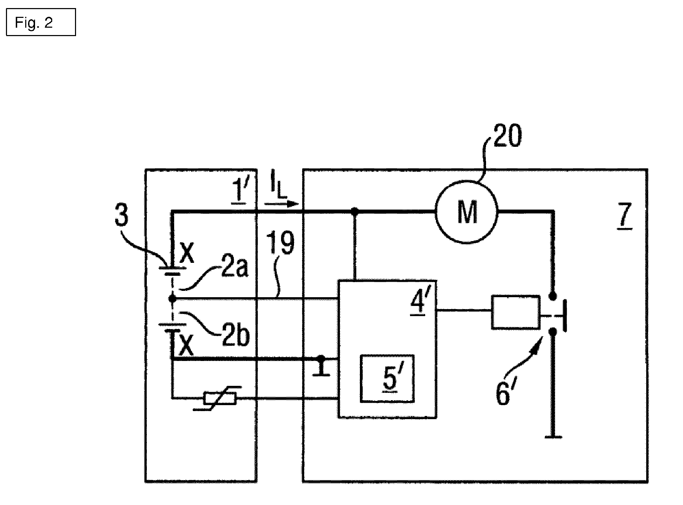

Nach Fig. 2 ist alternativ ein Akkupack 1 mit einem Mittelspannungskontakt 19, welcher die Zwischenspannung zwischen genau zwei in Serie geschaltete Zellgruppen 2a, 2b zu je X = 15 einzelnen Nickel-Cadmium(NiCd)-Zellen 3 von je 1,2 V Zellspannung UZ (3) abgreift, mit einer 36 V-Akkuhandwerkzeugmaschine 7 mit einem Elektromotor 20 als Verbraucher verbunden, wobei die als Tiefentladeschutz wirksame Kontrollschaltung 4' vollständig durch die mikrocontrollergesteuerte Motorsteuerung der Akkuhandwerkzeugmaschine 7 mit einem programmgesteuerten Verfahrensalgorithmus 5 und mit einem elektronisch angesteuerten Leistungsschaltelement 6' in Form eines Relais ausgebildet ist. Alternativ können aber auch mehr als zwei in Serie geschalten Zellgruppen verwendet werden.

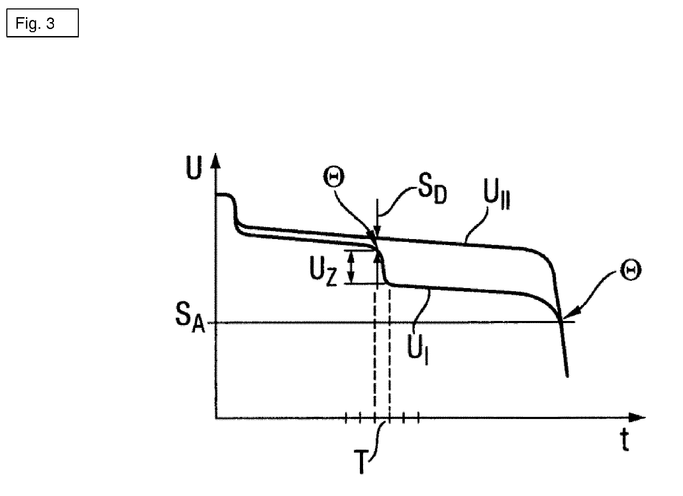

Nach dem in Fig. 3 dargestellten Spannungs U-Zeit t-Diagramm eines Entladevorgangs basiert das Verfahren für einen Tiefentladeschutz für Akkupacks 1 (1,2) mit zwei zahlenmäßig gleichen, in Serie geschalten Zellgruppen 2a, 2b (1, 2) zur sicheren Unterbindung der Tiefentladung durch Umpolen einer einzelnen schwächsten Zelle 3 (1, 2) auf der rechtzeitigen Detektion eines auf eine wahrscheinliche Umpolung hinweisenden Ereignisses [Theta]. Gemäß einer weiteren nicht gezeigten Ausführungsform der vorliegenden Erfindung können auch zahlenmäßig ungleiche, in Serie geschaltete Zellgruppen verwendet werden. Die erste Gruppenspannung UI zeigt einen durch Umpolen einer schwächsten Zelle 3 (1, 2) bedingten schnellen Umpolvorgang mit einer der Zellspannung UZ entsprechenden schnellen Spannungsänderung. Zur Detektion des auf eine wahrscheinliche Umpolung hinweisenden Ereignisses [Theta] wird, wenn die schnelle zeitliche Änderung der Differenz der beiden, je einer Zellgruppe 2a, 2b (1, 2) zugeordneten, Gruppenspannungen UI, UII innerhalb einer zeitlich periodisch aufeinander folgenden Differenzschrittspanne T = 1 s betraglich einen Differenzschwellwert SD = 0,8 V (umgekehrt proportional abhängig von Belastungsstrom IL) überschreitet oder eine der beiden sich langsam ändernden Gruppenspannungen UI, UII absolut den Absolutschwellwert SA = 0,7 V x Zellen 3/Zellgruppe 2a, 2b unterschreitet, jeweils ein auf eine wahrscheinliche Umpolung hinweisendes Ereignisses [Theta] detektiert.

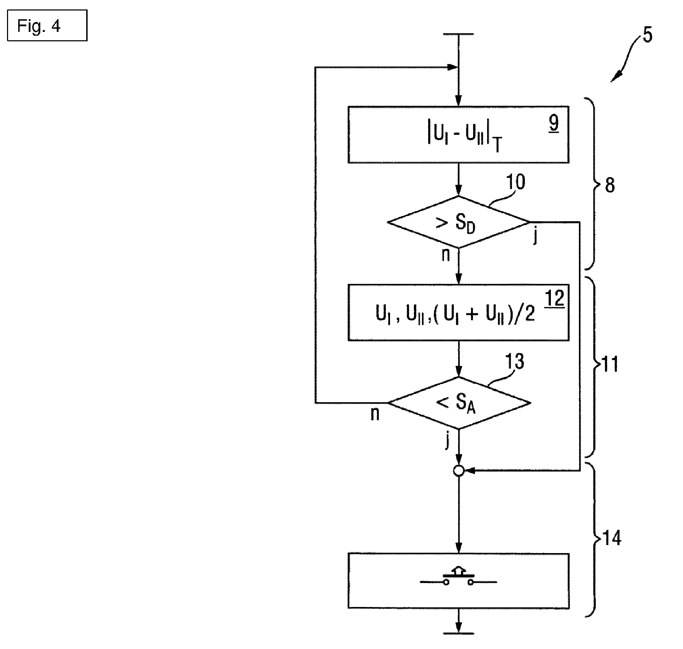

Nach Fig. 4 beinhaltet der programmgesteuerte Verfahrensalgorithmus 5 (1, 2) für einen Tiefentladeschutz einen in einer Programmschleife mehrfach zeitlich wiederholten Differenzmessschritt 8 zur Detektion eines auf eine wahrscheinliche Umpolung hinweisenden Ereignisses [Theta] auf. In diesem Differenzmessschritt 8 wird in einem Differenzmodul 9 die zeitliche Änderung des Betrags der Differenz der beiden Gruppenspannungen UI, UII innerhalb einer zeitlich periodisch aufeinander folgenden Differenzschrittspanne T bestimmt und in einem Differenzvergleicher 10 mit dem Differenzschwellwert SD verglichen, wobei bei Überschreitung das Ereignisses [Theta] signalisiert wird. Weiter wird in einem weiteren zeitlich wiederholten Absolutmessschritt 11 zur Detektion eines auf eine wahrscheinliche Umpolung hinweisenden Ereignisses [Theta] in einem Absolutmodul 12 die Gruppenspannungen UI, UII jeder der beiden Zellengruppen 2a, 2b (1, 2) sowie die Hälfte deren Summe unabhängig in einem Absolutvergleicher 13 auf Unterschreitung eines Absolutschwellwerts SA hin überprüft, wobei bei einer Unterschreitung das Ereignis [Theta] signalisiert wird. In einem nur bei einem signalisierten Ereignis [Theta] bedingt ausgeführten nachfolgenden Trennschritt 14 wird über ein Schaltsignal zum Leistungsschaltelement 6' (2) der Akkupack 1 (1, 2) elektrisch vom Verbraucher (Akkuhandwerkzeugmaschine 7 in 2) getrennt.

## Patentansprüche

1. Verfahren für einen Tiefentladeschutz für Akkupacks (1) mit in Serie geschalten Zellgruppen (2a, 2b) zur sicheren Unterbindung der Tiefentladung des Akkupacks (1) durch Umpolen einer einzelnen schwächsten Zelle (3),
**dadurch gekennzeichnet, dass** ein zeitlich wiederholter Differenzmessschritt (8) zur Detektion eines auf eine wahrscheinliche Umpolung einer schwächsten Zelle (3) hinweisenden Ereignisses ([Theta]) vorhanden ist, bei welchem die zeitliche Änderung der Spannungsdifferenz zwischen zwei zahlenmäßig gleichen oder ungleichen Zellgruppen (2a, 2b) auf betragsmäßige Überschreitung eines Differenzschwellwerts (SD) hin überprüft wird, welcher ein zeitlich schnelles Umpolen einer einzelnen schwächsten Zelle (3) in genau einer Zellengruppe (2a, 2b) sicher von der zeitlich langsamen Schwankung der Spannungsdifferenz zwischen beiden Zellengruppen (2a, 2b) während einer üblichen Entladekennlinie ohne Umpolen einer einzelnen schwächsten Zelle (3) unterscheidet.

2. Verfahren nach Anspruch 1,
**dadurch gekennzeichnet, dass** der Differenzschwellwert (SD) im Bereich zwischen 0.5 V und 1.0 V liegt.

3. Verfahren nach Anspruch 1 oder 2,
**dadurch gekennzeichnet, dass** der Differenzmessschritt (8) zeitlich periodisch mit einer Differenzschrittspanne (T) im Bereich zwischen 0.1 s und 10 s wiederholt wird.

4. Verfahren nach einem der Ansprüche 1 bis 3,
**dadurch gekennzeichnet, dass** in einem weiteren zeitlich wiederholten Absolutmessschritt (11) zur Detektion eines auf eine wahrscheinliche Umpolung hinweisenden Ereignisses ([Theta]) die Gesamtspannung des Akkupacks (1) und/oder die Gruppenspannungen (UI, UII) der beiden Zellengruppen (2a, 2b) auf Unterschreitung eines Absolutschwellwerts (SA) hin überprüft wird.

5. Verfahren nach einem der Ansprüche 1 bis 4,
**dadurch gekennzeichnet, dass** in einem dem Differenzmessschritt (8) und optional dem Absolutmessschritt (11) nachfolgenden bedingten Trennschritt (14) beim Eintritt des auf eine wahrscheinliche Umpolung hinweisenden Ereignisses ([Theta]) der Akkupack (1) elektrisch vom Verbraucher getrennt wird.

6. Akkupack mit zwei in Serie geschalten Zellgruppen (2a, 2b) mit jeweils einer gleichen Anzahl von Zellen (3),
**dadurch gekennzeichnet, dass** die Kontrollschaltung (5) zur Durchführung des Verfahrens nach einem der Ansprüche 1 bis 5 vollständig innerhalb angeordnet ist.

7. Akkupack mit zwei in Serie geschalten Zellgruppen (2a, 2b) mit jeweils einer ungleichen Anzahl von Zellen (3),
**dadurch gekennzeichnet, dass** die Kontrollschaltung (5) zur Durchführung des Verfahrens nach einem der Ansprüche 1 bis 5 vollständig innerhalb angeordnet ist.

8. Akkupack nach Anspruch 6 oder 7,
**dadurch gekennzeichnet, dass** die Anzahl von Zellen (3) je Zellgruppe (2) im Mengenbereich zwischen 5 und 20 liegt.

9. Akkuhandwerkzeugmaschine mit zugeordneten Akkupack (1) mit einem Mittelspannungskontakt (19), welcher elektrisch zwischen zwei in Serie geschalten Zellgruppen (2a, 2b) mit jeweils einer gleichen oder ungleichen Anzahl von Zellen (3) angeordnet ist, sowie mit einem antreibenden Elektromotor (20),
**dadurch gekennzeichnet, dass** die Kontrollschaltung (5') zur Durchführung des Verfahrens nach einem der Ansprüche 1 bis 5 vollständig in die Motorsteuerung des Elektromotors (20) integriert ist.
